# EUROPÄISCHE PATENTSCHRIFT

(11) **EP 0 503 350 B1**
(45) Veröffentlichungstag und Bekanntmachung des Hinweises auf die Patenterteilung: **17.05.1995**
(21) Anmeldenummer: 92103112.6
(22) Anmeldetag: 25.02.1992
(51) Int. Cl.: B62D 49/06, B60K 11/04

(54) **Arbeitsfahrzeug**
Working vehicle
Véhicule de travail

(30) Priorität: 08.03.1991 US 666755
(43) Veröffentlichungstag der Anmeldung: 16.09.1992
(73) Patentinhaber: DEERE & COMPANY, Moline, Illinois 61265 (US)
(72) Erfinder: Woods, Terrill Wayne, Cedar Falls, Iowa 50613 (US); Madson, Lyle Robert, Cedar Falls, Iowa 50613 (US)
(74) Vertreter: Feldmann, Bernhard

(56) Entgegenhaltungen:
- GB-A- 2 114 072
- US-A- 1 979 191
- US-A- 2 491 283
- US-A- 2 549 524
- US-A- 3 667 563

## Beschreibung

Die Erfindung betrifft ein Arbeitsfahrzeug mit einer Achse, die lenkbare Räder trägt, einer Antriebsmaschine und einem Kühlsystem für die Antriebsmaschine, wobei die Antriebsmachine über der Achse angeordnet ist.

Das Pflanzen, das Kultivieren und viele andere Anbau- und Erntearbeiten erfordern eine extrem genaue Manövrierbarkeit des Arbeitsfahrzeuges, bei der die kritischen Arbeitsabläufe beobachtbar sind. Für das Fahren auf dem Bauernhof und zwischen engen Anbaureihen wird ebenfalls eine sehr gute Wendigkeit gefordert.

Schlepper mit mechanischem Frontantrieb und sehr großen Vorderrädern sind häufig nicht sehr wendig. Dieser Nachteil wird durch die Tendenz zu immer engeren Radabständen zwischen Rädern einer Achse, für beispielsweise Reihen von 76,2 cm (30 inch) Breite, die sich durch verstellbare Radabstände bei vielen Schleppern realisieren lassen, verschlimmert. Ferner hat sich der zwischen den Rädern liegende Sichtbereich bei vielen Schleppern gegenüber früheren Generationen stetig vermindert. Schließlich ist im Laufe der Jahre ein Teil des Sichtbereiches durch die zunehmende Komplexität der Fahrzeugkabine, des mechanischen Frontantriebes, die Klimaanlage und dergleichen verloren gegangen. Diese Probleme treten bei allen derzeitigen Schleppern der Hauptherstellerfirmen auf. Ein derartiges, dem Oberbegriff von Anspruch 1 entsprechendes Fahrzeug, ist z.B.aus GB-A-2 114 072 bekannt.

Die der Erfindung zugrunde liegende Aufgabe wird darin gesehen, ein Arbeitsfahrzeug mit einer neuen Konfiguration anzugeben, welches eine erhebliche Verbesserung des Sichtbereichs, der Manövrierbarkeit und der Wartungsfreundlichkeit aufweist. Diese Vorzüge sollen sich sowohl bei Reihenkulturschleppern als auch bei anderen Arbeitsfahrzeugen realisieren lassen.

Die Aufgabe wird für ein Arbeitsfahrzeug der eingangs genannten Art dadurch gelöst, daß das Kühlsystem für die Antriebsmaschine wird in einem ausreichenden Abstand zur Antriebsmaschine angeordnet wird, so daß selbst bei relativ eng stehenden großen Rädern diese sich stark einschlagen lassen, wobei sie in den Zwischenraum zwischen Antriebsmaschine und Kühlsystem eingreifen.

Zur weiteren Verbesserung der Manövrierbarkeit weist die Schlepperkonfiguration in der Nähe jedes Vorderreifens seitlich ausgehölte Bereiche auf, so daß die Vorderreifen sich tatsächlich in einen Bereich einschlagen lassen, der herkömmlich Teil des Schlepperrumpfes war.

Die Schlepperkonfiguration enthält vorzugsweise ein hohes, aber schmales Getriebe, das unmittelbar vor der Fahrzeugkabine angeordnet ist und damit den Sichtbereich verbessert und für die Wartung gut zugänglich ist. Hierdurch bleibt auch der Bereich unterhalb der Fahrzeugkabine frei von dem herkömmlichen Getriebegehäuse, so daß jetzt ein um beispielsweise 50 % größerer Kraftstofftank an dieser geeigneten Stelle untergebracht werden kann.

Vorzugsweise wird an Stelle eines Rahmens, der verschiedene Komponenten trägt, eine tragend ausgebildete Ölfangschale verwendet. Neben einer Verminderung der erforderlichen Teile hat solch eine Ölfangschale den Vorteil, daß sie sich in der Nachbarschaft der Vorderräder relativ schmal ausbilden läßt und dadurch den Sichtbereich und die Manövrierbarkeit weiter verbessert.

Durch die vorgeschlagene Schlepperkonfiguration ergeben sich viele Vorteile. Zum einen ermöglicht sie einen großen Sichtbereich zwischen den Vorderrädern, selbst wenn diese zur Bearbeitung enger Reihen eng beieinander stehen, was bei herkömmlichen Schleppern nicht oder nur begrenzt gegeben war. Zum anderen ergibt sich eine ausgezeichnete Manövrierbarkeit insbesondere bei Schleppern mit mechanischem Frontantrieb und sehr großen Reifensätzen, die für enge Reihen ausgelegt sind. Die erfindungsgemäße Konfiguration läßt beispielsweise eine Verbesserung von 20 % gegenüber den John Deere Reihenkulturschleppern der Serie 55, die bisher in der Spitzenklasse lagen, zu. Der Wendekreis ist extrem klein.

Entsprechend des durch die erfindungsgemäße Konfiguration gegebenen verbesserten Zuganges lassen sich die täglichen Wartungs- und Pflegearbeitszeiten um ca. 30 % gegenüber dem genannten John Deere Schlepper verringern. Entsprechend ergeben sich auch verbesserte Zeiten für Reparatur- und Überholungsarbeiten, die sich um ca. 40 bis 60 % vermindern lassen.

Der Sichtbereich zwischen den Vorderrädern ist erstaunlich groß. Bei aufrechtem Sitz auf dem Fahrersitz kann die Bedienungsperson einen Bereich beobachten, der nur wenige Zentimeter von der Mittellinie des Schleppers entfernt liegt. Wenn die Bedienungsperson ihren Kopf nur wenige Zentimeter zur Seite neigt, kann sie die Mittelinie sehen.

Weitere vorteilhafte Ausgestaltungen und Weiterbildungen der Erfindung gehen aus den Unteransprüchen hervor.

Anhand der Zeichnung, die ein Ausführungsbeispiel der Erfindung zeigt, werden nachfolgend die Erfindung sowie weitere Vorteile und vorteilhafte Weiterbildungen und Ausgestaltungen der Erfindung näher beschrieben und erläutert.

Es zeigt:
- Fig. 1: die perspektivische Ansicht von vorn und oben eines erfindungsgemäßen Schleppers,
- Fig. 2: die perspektivische Ansicht von der Seite und oben des Schleppers gemäß Fig. 1,
- Fig. 3: die teilweise dargestellte Seitenansicht eines Schleppers gemäß Fig. 1, aus der die Lage verschiedener Komponenten innerhalb des Schleppers hervorgeht, und
- Fig. 4: die teilweise dargestellte Aufsicht eines Schleppers gemäß Fig. 1, aus der die Lage verschiedener Komponenten innerhalb des Schleppers sowie zwei Einschlaglagen der Vorderräder hervorgehen.

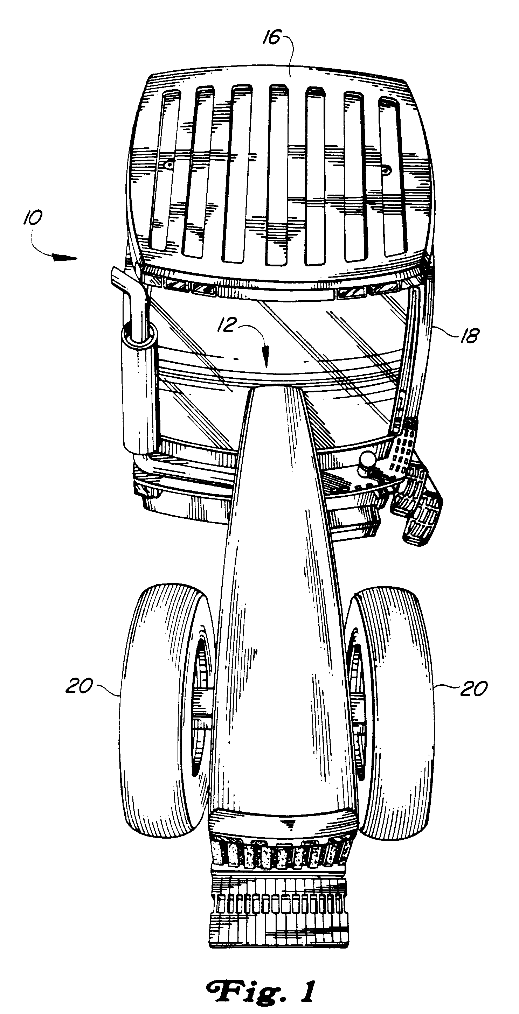

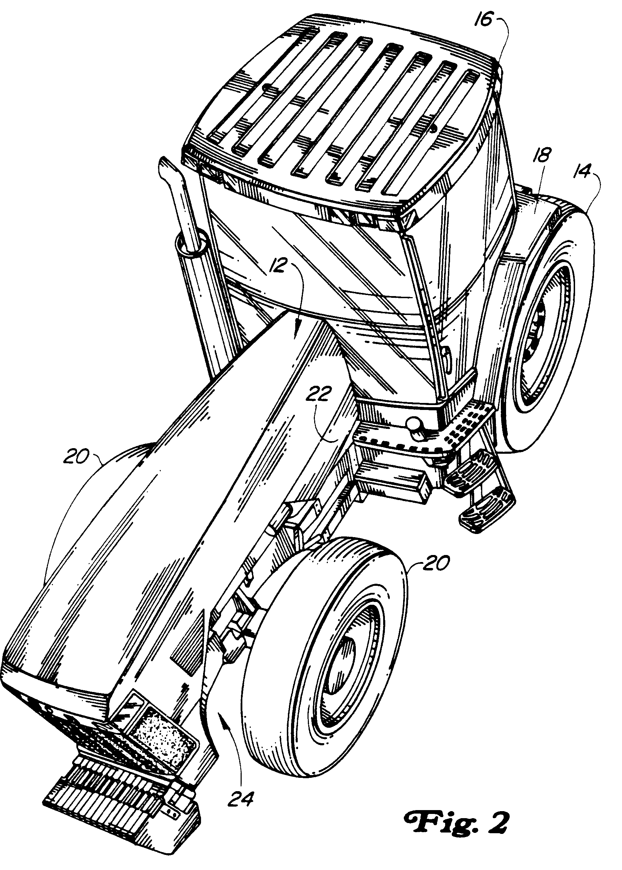

Die Figuren 1 und 2 veranschaulichen einen Schlepper 10 gemäß der vorliegenden Erfindung. Auf den ersten Blick unterscheidet sich dieser Schlepper 10 in zwei wesentlichen Punkten von bisher üblichen Schleppern: erstens weist der Schlepper 10 eine sehr schmale Taille 12 auf, zweitens sind die Hinterräder 14 in der Ansicht gemäß Fig. 1, die den Schlepper 10 in Längsrichtung von schräg vorn und oben darstellt, nicht sichtbar.

Die Hinterräder 14 sind einerseits wegen ihres engen Abstandes zueinander und andererseits wegen der Breite des Bedienungsstandes bzw. der Kabine 16 und der Kotschützer 18 in Fig. 1 nicht sichtbar. Die Hinterräder 14 würden in Fig. 1 sichtbar sein, wenn sie mit einem größeren Abstand zueinander montiert wären oder wenn die Kabine 16 und/oder die Kotschützer 18 schmaler wären.

Durch die schmale Taille 12 ergibt sich ein großer Sichtbereich zwischen den Vorderrädern 20 des vorliegenden Schleppers 10. Nicht nur die Haubenlinie des Schleppers 10 verengt sich vom vorderen Ende aus in Richtung Kabine 16, sondern selbst bei der Kabine 16 verengt sich der Bodenbereich 22 der Haube weiter, wodurch sich ein maximales Gesichtsfeld zwischen den Vorderrädern 20 ergibt.

Durch seitliche ausgesparte Bereiche, die bei 24 dargestellt sind, ergibt sich eine erheblich verbesserte Wendigkeit des erfindungsgemäßen Schleppers 10 gegenüber bekannten Schleppern. Durch die ausgesparten Bereiche 24 läßt sich der Schlepperrumpf hier ausreichend schmal und derart ausbilden, daß die eingeschlagenen Vorderreifen 20 in die ausgesparten Bereiche 24 und unter den oberen Bereich des Schleppers 10 eingreifen, wodurch sich ein sehr kleiner Wenderadius ergibt.

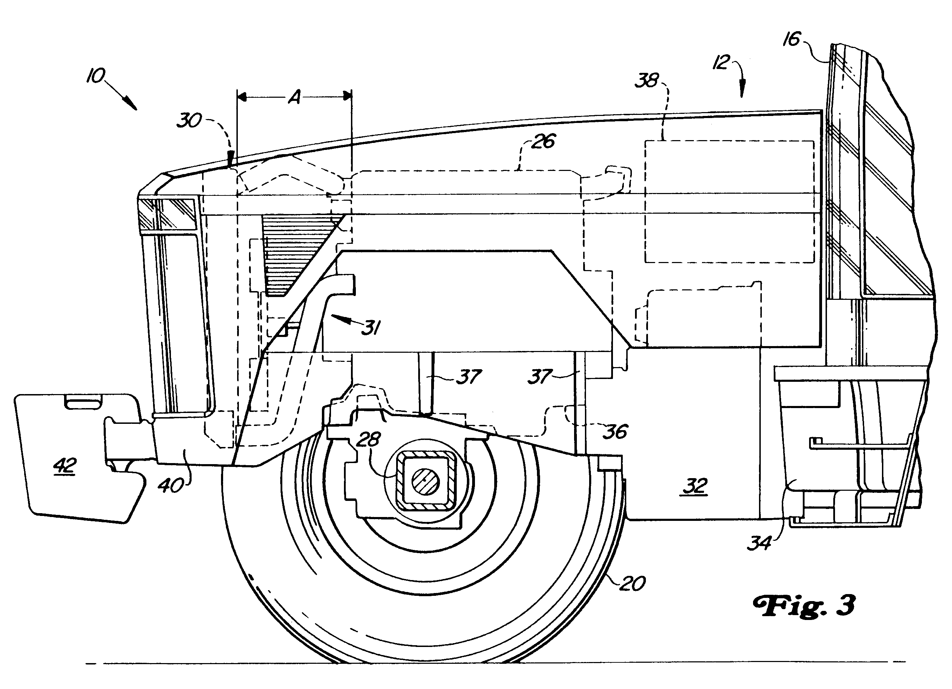

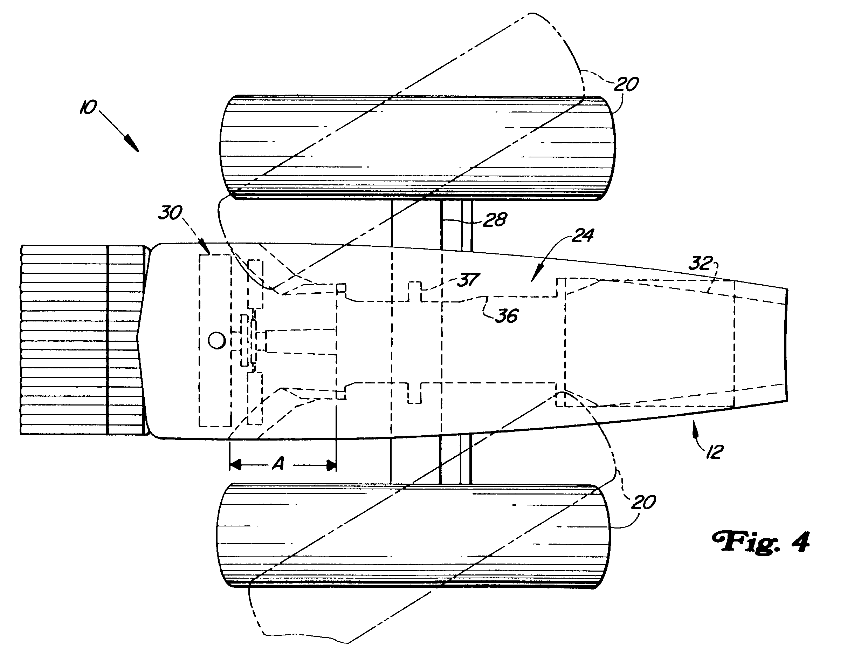

Aus den Figuren 3 und 4 geht die Anordnung der Komponenten hervor, die die Ausbildung der engen Taille 12 und des ausgesparten Bereiches 24 ermöglichen. Über der Vorderachse 28 ist eine Antriebsmaschine 26 angeordnet. Zwar liegt der Schwerpunkt der Antriebsmaschine 26 im dargestellten Ausführungsbeispiel etwas hinter der Vorderachse 28, jedoch liegt ein wesentlicher Teil der Antriebsmaschine 26 über der Vorderachse 28. Die Kühler, Lüfter und andere Teile des Kühlsystems 30 sind mit beträchtlichem Abstand zur Antriebsmaschine 26 vor dieser angeordnet. Dies steht im ausgeprägten Gegensatz zu bekannten Konstruktionen, bei denen das Kühlsystem unmittelbar benachbart zur Antriebsmaschine angeordnet ist.

Durch die Lage des Kühlsystems 30 ergibt sich ein Zwischenraum A, in den die vorderen Kanten der Vorderreifen 20 während ihres Einschlages eingreifen können, wie es durch die strichpunktierten Linien in Fig. 4 dargestellt ist. Es ist besonders wichtig, daß der untere Bereich dieses Zwischenraumes A offen ist. Der obere Bereich kann unterschiedliche Komponenten, beispielsweise Verbindungsschläuche des Kühlsystems, Generatoren und dergleichen, enthalten, die allgemein durch das Bezugszeichen 31 bezeichnet sind und den Einschlag der Vorderreifen 20 nicht stören, da der obere Bereich der Vorderreifen 20 wegen deren gekrümmten Umfangslinie weiter außerhalb der Mittellinie des Schleppers 10 liegt.

Unter anderem ist die Antriebsmaschine 26 durch die Verlagerung über die Vorderachse 28 gegenüber ihrer üblichen Lage mehr nach vorn verschoben. Hierdurch wird der Raum für ein hohes aber schmales Getriebe 32 zwischen Antriebsmaschine 26 und Kabine 16 bereitgestellt. Auch diese Ausbildung steht im Gegensatz zu bisherigen Schlepperkonstruktionen, bei denen das Getriebe im wesentlichen unterhalb der Kabine angeordnet ist. Durch die genannte Ausbildung ergibt sich zusätzlicher freier Raum unterhalb der Kabine 16, so daß ein größerer Treibstofftank 34 unter der Kabine 16 untergebracht werden kann.

Durch die Verwendung eines geeigneten Rahmens oder dergleichen können die Antriebsmaschine 26, das Kühlsystem 30 und das Getriebe 32 in geeignetem Abstand zueinander angeordnet werden. Die bisher übliche Blockbauweise aus Antriebsmaschine und Getriebe, durch die sich eine Tragstruktur ergab, kann hierbei aufgegeben werden. Es kann jedoch auch an Stelle eines Rahmens gemäß einer weiteren Ausgestaltung der Erfindung auch eine tragende Ölfangschale 36 verwendet werden. Diese Ölfangschale 36 dient auf übliche Weise als Ölfänger für die Antriebsmaschine 26. Sie ist jedoch aus besonders schweren Material, beispielsweise Gußeisen, ausgebildet und mit geeigneten Verstärkungsrippen 37 versehen, so daß sie in der Lage ist, das Gewicht verschiedener Komponenten zu tragen. Dies hat den Vorteil, daß die Ölfangschale 36 relativ schmal ausgebildet werden kann, so daß sich genügend Platz in dem ausgesparten Bereich 24 ergibt. Durch diese Ausbildung kann die Antriebsmaschine 26 um ein gutes Stück über den ausgesparten Bereich 24 angehoben werden.

Bei dieser Ausgestaltung ist die Ölfangschale 36 an dem Gehäuse der Vorderachse 28 befestigt. Die Antriebsmaschine 26 ist oben auf der Ölfangschale 36 montiert. Das Kühlsystem 30 ist entwerder direkt oder mit Hilfe von Halteelementen am vorderen Ende der Ölfangschale 36 und das Getriebegehäuse ist an dem hinteren Ende der Ölfangschale 36 befestigt.

Vorzugsweise sind das hintere Ende der Ölfangschale 36 und der vordere Teil des Getriebes 32 besonders schmal ausgebildet, so daß der ausgesparte Bereich 24 sich unter ihnen erstreckt. Die hinteren Kanten der Vorderreifen 20 können hierdurch in den ausgesparten Bereich 24 unter diesen Teil des Schlepperrumpfes eingreifen, wie es aus der strichpunktierten Linie in Fig. 4 hervorgeht.

Wie in Fig. 3 dargestellt, befindet sich über dem Getriebe 32 und hinter der Antriebsmaschine 26 ein großer leerer Raum 38. Dieser Raum 38 eignet sich für die Unterbringung von Batterien, Klimaanlage, Heizeinrichtung und dergleichen.

Der Nutzeffekt der beschriebenen Konfiguration liegt darin, daß die Hauptkomponenten, die einer Wartung bedürfen, beispielsweise die Antriebsmaschine 26, das Kühlsystem 30 und das Getriebe 32, nicht in schlecht zugänglichen Bereichen zwischen den Vorderrädern oder unter der Kabine liegen. Dies bedeutet, daß diese Komponenten besser zugänglich sind, wodurch sich eine erhebliche Steigerung der Servicefreundlichkeit des Schleppers 10 ergibt.

Es soll erwähnt werden, daß die erfindungsgemäße Konfiguration sich in einer Verlängerung des vorderen, vor der Vorderachse 28 liegenden Bereiches 40 des Schleppers auswirken kann. Eine Folge hiervon ist es, daß bei der Ausbildung des vorderen Bereiches 40 sowie irgend eines an den Schlepper anbaubaren Frontgewichtes 42 darauf geachtet werden sollte, daß auch dann genügend Bodenfreiraum vorhanden ist, wenn der Schlepper 10 durch eine Mulde oder über eine Schwelle fährt.

Auch wenn die Erfindung lediglich an Hand eines bestimmten Ausführungsbeispieles beschrieben wurde, erschließen sich für den Fachmann im Lichte der vorstehenden Beschreibung viele verschiedenartige Alternativen, Modifikationen und Varianten, die unter die vorliegende Erfindung fallen, wie sie in den nachfolgenden Patentansprüchen definiert ist. Beispielsweise wurde die erfindungsgemäße Konfiguration anhand eines Reihenkulturschleppers beschrieben, sie läßt sich jedoch auch ohne weiteres auf ein beliebiges, auch nicht landwirtschaftliches Arbeitsfahrzeug anwenden.

## Patentansprüche

1. Arbeitsfahrzeug (10) mit einer Achse (28), die lenkbare Räder (20) trägt, einer Antriebsmaschine (26) und einem Kühlsystem (30) für die Antriebsmaschine (26), wobei die Antriebsmaschine (26) über der Achse (28) angeordnet ist, dadurch gekennzeichnet, daß zwischen Antriebsmaschine (26) und Kühlsystem (30) ein ausreichender Zwischenraum (A) gegeben ist, so daß bei Lenkeinschlag die lenkbaren Räder (20) in einen Freiraum zwischen der Antriebsmaschine (26) und dem Kühlsystem (30) eingreifen können.

2. Arbeitsfahrzeug nach Anspruch 1, dadurch gekennzeichnet, daß ein Bedienungsstand oder eine Fahrzeugkabine (16) sowie ein Getriebe (32) vorgesehen sind und daß das Getriebe (32) zwischen der Antriebsmaschine (26) und der Kabine (16) angeordnet ist.

3. Arbeitsfahrzeug nach Anspruch 1 oder 2, dadurch gekennzeichnet, daß über dem Kühlsystem (30), der Antriebsmaschine (26) und gegebenenfalls dem Getriebe (32) eine Haube angeordnet ist, die die genannten Komponenten wenigstens teilweise abdeckt, und daß die Haube in der Nähe der Fahrzeugkabine (16) schmaler ist als im Bereich der Antriebsmaschine (26).

4. Arbeitsfahrzeug nach Anspruch 3, dadurch gekennzeichnet, daß die Haube einen verfügbaren Raum (38) oberhalb des Getriebes (36) und zwischen Antriebsmaschine (26) und Fahrzeugkabine (16) einschließt.

5. Arbeitsfahrzeug nach einem der Ansprüche 2 bis 4, dadurch gekennzeichnet, daß ein Treibstofftank (34) vorgesehen ist, der im wesentlichen hinter dem Getriebe (32) und unter der Fahrzeugkabine (16) angeordnet ist.

6. Arbeitsfahrzeug nach einem der Ansprüche 1 bis 5, dadurch gekennzeichnet, daß eine als Ölschale (36) ausgebildete, auf der Achse (28) befestigte Tragstruktur vorgesehen ist, daß oberhalb der Ölfangschale (36) die Antriebsmaschine (26) befestigt ist und daß an in Längsrichtung des Arbeitsfahrzeuges einem Ende der Ölfangschale (36) das Kühlsystem (30) und gegebenenfalls am anderen Ende der Ölfangschale (36) das Getriebe (32) befestigt sind.

7. Arbeitsfahrzeug nach Anspruch 6, dadurch gekennzeichnet, daß die Tragstruktur (36) und das Getriebe (32) genügend schmal ausgebildet sind, so daß eine Bedienungsperson, die sich auf dem Fahrersitz aufhält, einen erheblichen Teil des Bodenbereichs zwischen den beiden Reifen (20) beobachten kann.

8. Arbeitsfahrzeug nach Anspruch 6 oder 7, dadurch gekennzeichnet, daß die Tragstruktur (36), die Antriebsmaschine (26) und das Getriebe (32) so ausgebildet sind, daß sich benachbart zu jedem Reifen (20) ein ausgesparter Bereich (24) ergibt, in den der Reifen (20) bei einem Lenkeinschlag einschwenken kann.

9. Arbeitsfahrzeug nach einem der Ansprüche 1 bis 8, dadurch gekennzeichnet, daß eine weitere Achse mit weiteren Rädern (14) vorgesehen ist, daß die weitere Achse im wesentlichen unterhalb und hinter der Fahrzeugkabine (16) angeordnet ist und daß die Fahrzeugkabine (16) mindestens so breit ist wie die Weite der zusätzlichen Räder (14).

10. Arbeitsfahrzeug nach Anspruch 9, dadurch gekennzeichnet, daß seitlich an der Fahrzeugkabine (16) über den zusätzlichen Rädern (14) Kotschützer (18) angeordnet sind, deren seitliche Abmessung mindestens so breit ist, wie die der zusätzlichen Räder (14).

## Claims

1. Working vehicle (10) with an axle (28) supporting steerable wheels (20), with a driving engine (26) and a cooling system (30) for said driving engine (26), the driving engine (26) being disposed above the axle (28), characterised in that a sufficient intermediate space (A) is provided between driving engine (26) and cooling system (30) so that, upon deflection of the wheels when steering, the steerable wheels (20) can occupy a free space between the driving engine (26) and the cooling system (30).

2. Working vehicle according to claim 1, characterised in that an operator's stand or a vehicle cab (16) and a gearbox (32) are provided, and in that the gearbox (32) is disposed between the driving engine (26) and the cab (16).

3. Working vehicle according to claim 1 or 2, characterised in that a hood is disposed above the cooling system (30), the driving engine (26), and if necessary the gearbox (32), said hood at least partly covering the named components, and in that the hood is narrower in the vicinity of the vehicle cab (16) than in the region of the driving engine (26).

4. Working vehicle according to claim 3, characterised in that the hood encloses an available space (38) above the gearbox (32) and between the driving engine (26) and the vehicle cab (16).

5. Working vehicle according to one of claims 2 to 4, characterised in that a fuel tank (34) is provided, which is disposed substantially behind the gearbox (32) and beneath the vehicle cab (16).

6. Working vehicle according to one of claims 1 to 5, characterised in that there is provided a support structure in the form of an oil bowl (36) ,secured to the axle (28), in that the driving engine (26) is secured above the oil trap bowl (36), and in that the cooling system (30) is attached, in the longitudinal direction of the working vehicle, to one end of the oil trap bowl (36) and, if necessary, the gearbox (32) is attached to the other end of the oil trap bowl (36).

7. Working vehicle according to claim 6, characterised in that the support structure (36) and the gearbox (32) are sufficiently narrow for an operative sitting in the driver's seat to be able to observe a considerable portion of the ground area between the two tyres (20).

8. Working vehicle according to claim 6 or 7, characterised in that the support structure (36), the driving engine (26) and the gearbox (32) are so designed that there results adjacent to each tyre (20) a hollowed-out space (24), into which the tyre (20) can be deflected during steering.

9. Working vehicle according to one of claims 1 to 8, characterised in that a further axle is provided with further wheels (14), in that the additional axle is disposed substantially beneath and behind the vehicle cab (16), and in that the vehicle cab (16) is at least as wide as the width of the additional wheels (14).

10. Working vehicle according to claim 9, characterised in that there are located, laterally of the vehicle cab (16) and above the additional wheels (14), mudguards (18), whose lateral dimension is at least as wide as that of the additional wheels (14).

## Revendications

1. Véhicule de travail (10) comportant un essieu (28), qui porte des roues orientables (20), un moteur d'entraînement (26) et un système de refroidissement (30) pour le moteur d'entraînement (26), le moteur d'entraînement (26) étant monté au-dessus de l'essieu (28), caractérisé en ce qu'entre le moteur d'entraînement (26) et le système de refroidissement (30) est formé un espace intercalaire suffisant (T) de sorte que, lors d'un braquage, les roues orientables peuvent pénétrer dans l'espace libre présent entre le moteur d'entraînement (26) et le système de refroidissement (30).

2. Véhicule de travail selon la revendication 1, caractérisé en ce qu'il est prévu un poste de commande ou une cabine (16) du véhicule ainsi qu'une transmission (32) et que la transmission (32) est disposée entre le moteur d'entraînement (26) et la cabine (16).

3. Véhicule de travail selon la revendication 1 ou 2, caractérisé en ce que au-dessus du système de refroidissement (30), du moteur d'entraînement (26) et éventuellement de la transmission (32) est disposé un capot qui recouvre au moins partiellement lesdits composants, et que le capot est plus étroit à proximité de la cabine (16) du véhicule que dans la zone du moteur d'entraînement (26).

4. Véhicule de travail selon la revendication 3, caractérisé en ce que le capot enserre un espace disponible (38) au-dessus de la transmission (36) et entre le moteur d'entraînement (26) et la cabine (16) du véhicule.

5. Véhicule de travail selon l'une des revendications 2 à 4, caractérisé en ce qu'il est prévu un réservoir de carburant (34), qui est disposé essentiellement en arrière de la transmission (32) et au-dessous de la cabine (16) du véhicule.

6. Véhicule de travail selon l'une des revendications 1 à 5, caractérisé en ce qu'il est prévu une structure de support réalisée sous la forme d'un bac à huile (36) et fixée à l'essieu (28), que le moteur d'entraînement (26) est fixé au-dessus du bac à huile (36) et que le système de refroidissement (30) est fixé sur une extrémité du bac à huile (36), dans la direction longitudinale du véhicule de travail, et que la transmission (32) est située à l'autre extrémité du bac à huile (36).

7. Véhicule de travail selon la revendication 6, caractérisé en ce que la structure de support (36) et la transmission (32) sont agencées de manière à être suffisamment étroites pour qu'un opérateur, qui se tient sur le siège du conducteur, puisse observer une partie importante de la zone du sol présente entre les deux pneumatiques (20).

8. Outil de travail selon la revendication 6 ou 7, caractérisé en ce que la structure de support (36), le moteur d'entraînement (26) et la transmission (32) sont agencés de telle sorte qu'on obtient, au voisinage de chaque pneumatique (20), une zone réservée (24), dans laquelle le pneumatique (20) peut pivoter lors d'un braquage.

9. Véhicule de travail selon l'une des revendications 1 à 8, caractérisé en ce qu'il est prévu un autre essieu comportant d'autres roues (14), que l'autre essieu est disposé essentiellement au-dessous et en arrière de la cabine (16) du véhicule et que la cabine (16) du véhicule possède une largeur au moins égale à la voie entre les roues supplémentaires (14).

10. Véhicule de travail selon la revendication 9, caractérisé en ce que latéralement sur la cabine (16) du véhicule sont montés, au-dessus des roues supplémentaires (14), des sabots d'ailes (18), dont la dimension latérale est au moins aussi large que celle des roues supplémentaires (14).
